# EUROPÄISCHE PATENTSCHRIFT

(11) **EP 3 174 738 B1**
(45) Veröffentlichungstag und Bekanntmachung des Hinweises auf die Patenterteilung: **14.08.2019**
(21) Anmeldenummer: 15723541.7
(22) Anmeldetag: 27.05.2015
(51) Int. Cl.: B60C 11/00, B60C 9/14, B60C 15/00, B60C 9/18

(54) **FAHRRADREIFEN**
BICYCLE TYRE
PNEU DE BICYCLETTE

(30) Priorität: 30.07.2014 DE 102014214892
(43) Veröffentlichungstag der Anmeldung: 07.06.2017
(73) Patentinhaber: Continental Reifen Deutschland GmbH, 30165 Hannover (DE)
(72) Erfinder: WURMBÄCK, Christian, 34596 Bad Zwesten (DE)
(74) Vertreter: Widjaja, Wira
(86) Internationale Anmeldenummer: PCT/EP2015/061616
(87) Internationale Veröffentlichungsnummer: WO 2016/015896

(56) Entgegenhaltungen:
- EP-A1- 1 384 601
- EP-A1- 1 632 364
- EP-A1- 1 918 128
- EP-A1- 2 666 650
- EP-A2- 0 901 915

## Beschreibung

Die Erfindung betrifft einen Fahrradreifen. Herkömmliche Fahrradreifen, insbesondere Rennradreifen, sind auf Rollwiderstand, Pannenschutz und Laufleistung ausgelegt und optimiert. Rennradreifen zeichnen sich dadurch aus, dass die Karkasse unterhalb des Laufstreifens überlappend angeordnet ist. Dadurch liegen unterhalb des Laufstreifens 3 Lagen der Karkasseinlage übereinander. Dieses steife Gewebepaket ' der Reifenkarkasse unterhalb der Lauffläche kann sich beim Fahren nicht optimal an den jeweiligen Untergrund anpassen. Dadurch fühlt sich der Reifen beim Fahren relativ steif und unkomfortabel an.

Ein solcher gattungsgemäßer Fahrradreifen ist aus der EP 1 384 601 A1 bekannt.

Die EP 1 632 364 A1, EP 1 918 128 A1 und EP 0 901 915 A2 offenbaren bekannte Reifenkonstruktionen.

Der Erfindung liegt die Aufgabe zu Grunde, einen Fahrradreifen zu schaffen, bei dem insb. der Fahrkomfort verbessert wird.

Gelöst wird die Aufgabe gemäß Anspruch 1.

Ein Vorteil des erfindungsgemäßen Reifens ist insbesondere darin zu sehen, dass durch die neue Reifenkonstruktion des Fahrradreifens der Fahrkomfort wesentlich verbessert wird. Bei der neuen Reifenkonstruktion sind zwischen dem Laufstreifen und der Reifenkarkasse eine dämpfende Gummieinlage aus einem hochelastischen Kautschuk angeordnet. Durch die spezielle Materialdicke der dämpfenden Gummieinlage wird der Fahrkomfort des Fahrradreifens wesentlich verbessert, da sich der Fahrradreifen insgesamt besser dem Fahrbahnuntergrund anpassen kann. Außerdem reichen die Karkasseinlagenenden maximal bis zu den seitlichen Randbereichen des Laufstreifens. Auf diese Weise weist die Reifenkarkasse unterhalb des Laufstreifens eine hohe Elastizität auf, wodurch ebenfalls der Fahrkomfort wesentlich verbessert wird. Insbesondere bei Rennradreifen führt die neue Reifenkonstruktion zu einer erheblichen Verbesserung des Fahrkomforts.

In einer vorteilhaften Weiterbildung der Erfindung ist vorgesehen, dass die Reifenkarkasse zwei übereinander liegende Karkasseinlagen aufweist, wobei durch die Karkasskonstruktion die Seitenwände versteift und der Rollwiderstand reduziert wird. Die zwei übereinanderliegenden Karkasseinlagen führen zu einer Vereinfachung des Herstellungsprozesses für Fahrradreifen. Außerdem kann durch diese Seitenwandkonstruktion der Rollwiderstand des Fahrradreifens reduziert werden.

In einer weiteren vorteilhaften Weiterbildung der Erfindung ist vorgesehen, dass die zwei übereinander liegenden Karkasseinlagen die gesamte Seitenwand abdecken und die Karkasseinlagenenden kurz unterhalb der seitlichen Randbereiche des Laufstreifens enden. Auf diese Weise wird ein optimaler Schutz für die Seitenwand gewährleistet.

In einer weiteren vorteilhaften Weiterbildung der Erfindung ist vorgesehen, dass die zwei übereinander liegende Karkasseinlagen einzelne parallel verlaufende Festigkeitsträger aufweisen,
wobei die Festigkeitsträger in einem zwischen Winkel 30 bis 60 Grad angeordnet sind
wobei die Festigkeitsträger der beiden Karkasseinlagen einen gegenläufigen Steigungswinkel aufweisen. Dadurch besitzt die Reifenkarkasse eine insgesamt hohe Steifigkeit.

In einer weiteren vorteilhaften Weiterbildung der Erfindung ist vorgesehen, dass die dämpfende Gummieinlage eine Materialdicke zwischen 0,3 und 1 mm aufweist. Bei dieser Materialdicke wird ein optimaler Fahrkomfort erzielt, wobei gleichzeitig der Rollwiderstand des Fahrradreifens nicht erhöht wird.

In einer weiteren vorteilhaften Weiterbildung der Erfindung ist vorgesehen, dass die dämpfende Gummieinlage aus einem hochelastischen Kautschuk mit einem Rebound-Materialwert zwischen 70 und 80 besteht.

Bei diesem Rebound-Materialwert wird ein optimaler Fahrkomfort erzielt, wobei gleichzeitig der Rollwiderstand des Fahrradreifens nicht erhöht wird.

In einer weiteren vorteilhaften Weiterbildung der Erfindung ist vorgesehen, dass unterhalb des Laufstreifens eine schnittresistente Faserlage, insbesondere aus Polyesterpolyacrylat, aus einem schnittfesten Gewebe angeordnet ist. Die schnittresistente Faserlage gewährleistet einen optimalen Pannenschutz für den Fahrradreifen.

Es ist vorgesehen, dass der Fahrradreifen ein Rennradreifen ist und mit einem Mindestreifendruck von ca. 5,5 Bar betrieben wird. Die neue Reifenkonstruktion lässt sich bei Rennradreifen besonders vorteilhaft einsetzen, da der Fahrkomfort wesentlich gesteigert wird.

Anhand eines Ausführungsbeispieles soll die Erfindung näher erläutert werden. Es zeigen:

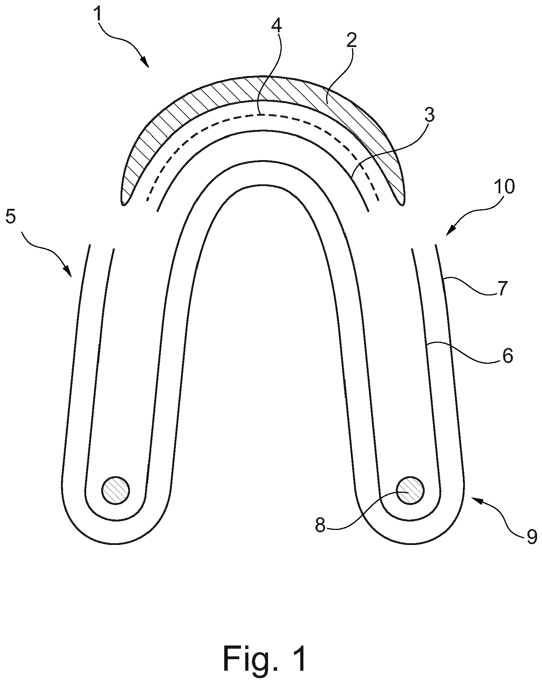

- Fig. 1:: einen Fahrradreifen im Querschnitt.

Die Fig. 1 zeigt die wesentlichen Reifenbauteile des Fahrradreifens in einer Querschnittansicht. Der dargestellte Rennradreifen weist zwei übereinanderliegende Karkasseinlagen 6 und 7 auf. Die Karkasseinlagenenden 10 sind auf beiden Seiten um den Kern 8 herumgeschlagen und reichen bis kurz unterhalb der seitlichen Bereiche des Laufstreifens 2. Die Karkasseinlagenenden 10 decken im Wesentlichen die Seitenwand des Rennradreifens vollständig ab. Im Bereich der Seitenwand sind somit 4 Lagen Karkassgewebe übereinander angeordnet, wodurch die Seitenwand insgesamt eine hohe Steifigkeit aufweist. Unterhalb des Laufstreifens 2 ist die dämpfende Gummieinlage 3 angeordnet, die vorzugsweise eine Materialdicke zwischen 0,3 und 1 mm aufweist. Die Gummieinlage 3 deckt die Unterseite des Laufstreifens 2 im Wesentlichen vollständig ab. Außerdem ist unterhalb des Laufstreifens 2 eine schnittresistente Faserlage 4 angeordnet, die in der Figur als gestrichelte Linie dargestellt ist. Die schnittresistente Faserlage gewährleistet einen optimalen Pannenschutz. Bei der neuen Reifenkonstruktion reichen die Karkasseinlagenenden 10 nicht bis unterhalb des Laufstreifens, wodurch der Fahrkomfort des Rennradreifens wesentlich verbessert wird. Die dämpfende Gummieinlage 3 trägt ebenfalls zur Steigerung des Fahrkomforts bei.

### Bezugszeichenliste

- 1: Fahrradreifen
- 2: Laufstreifen
- 3: Dämpfende Gummieinlage
- 4: schnittresistente Faserlage (gestrichelte Linie)
- 5: Seitenwand
- 6: Erste Karkasseinlage
- 7: Zweite Karkasseinlage
- 8: Kern
- 9: Position eines Nesselbandes
- 10: Karkasseinlagenenden

## Patentansprüche

1. Fahrradreifen (1) mit einem Laufstreifen (2), einer Reifenkarkasse. Reifenseitenwänden (5) und einem Reifenwulst mit einem Kern (8), wobei die Reifenkarkasse mindestens eine Karkasseinlage umfasst, wobei das Karkasseinlagenende (10) um den Kern (8) herumgeschlagen ist und in der Seitenwand (5) endet, wobei zwischen dem Laufstreifen (2) und der Reifenkarkasse eine dämpfende Gummieinlage (3) aus einem hochelastischen Kautschuk angeordnet ist,
**dadurch gekennzeichnet, dass**
die dämpfende Gummieinlage (3) eine Materialdicke zwischen 0,2 und 2 mm aufweist,
wobei die Karkasseinlagenenden (10) maximal bis zu den seitlichen Randbereichen des Laufstreifens (2) reichen,
wobei der Fahrradreifen (1) ein Rennradreifen ist und mit einem Mindestreifendruck von ca. 6,5 Bar betrieben wird.

2. Fahrradreifen nach Anspruch 1,
**dadurch gekennzeichnet, dass**
die Reifenkarkasse zwei übereinander liegende Karkasseinlagen (6, 7) aufweist, wobei durch die Karkasskonstruktion die Seitenwände (5) versteift und der Rollwiderstand reduziert wird.

3. Fahrradreifen nach einem der vorhergehenden Ansprüche,
**dadurch gekennzeichnet, dass**
die zwei übereinander liegenden Karkasseinlagen (6, 7) die gesamte
Seitenwand (5) abdecken und die Karkasseinlagenenden kurz unterhalb der seitlichen Randbereiche des Laufstreifens (2) enden.

4. Fahrradreifen nach einem der vorhergehenden Ansprüche,
**dadurch gekennzeichnet, dass**
die zwei übereinander liegenden Karkasseinlagen (6, 7) einzelne parallel verlaufende Festigkeitsträger aufweisen,
wobei die Festigkeitsträger in einem zwischen Winkel 40 bis 60 Grad angeordnet sind,
wobei die Festigkeitsträger der beiden Karkasseinlagen (6, 7) einen gegenläufigen Steigungswinkel aufweisen.

5. Fahrradreifen nach einem der vorhergehenden Ansprüche,
**dadurch gekennzeichnet, dass**
die dämpfende Gummieinlage (3) eine Materialdicke zwischen 0,3 und 1 mm aufweist.

6. Fahrradreifen nach einem der vorhergehenden Ansprüche,
**dadurch gekennzeichnet, dass**
die dämpfende Gummieinlage (3) aus einem hochelastischen Kautschuk mit einem Rebound-Materialwert zwischen 70 und 80 besteht.

7. Fahrradreifen nach einem der vorhergehenden Ansprüche,
**dadurch gekennzeichnet, dass**
unterhalb des Laufstreifens (2) eine schnittresistente Faserlage (4) aus einem schnittfesten Gewebe angeordnet ist.

## Claims

1. Bicycle tyre (1) having a running strip (2), a tyre carcass, tyre side walls (5), and a tyre bead having a core (8),
wherein the tyre carcass comprises at least one carcass inlay,
wherein the carcass inlay end (10) is folded back over the core (8) and terminates in the side wall (5),
wherein a damping rubber inlay (3) from a highly elastic rubber is disposed between the running strip (2) and the tyre carcass,
**characterized in that**
the damping rubber inlay (3) has a material thickness between 0.2 and 2 mm,
wherein the carcass inlay ends (10) at maximum reach up to the lateral peripheral regions of the running strip (2),
wherein the bicycle tyre (1) is a racing bicycle tyre and is operated at a minimum tyre pressure of approx. 6.5 bar.

2. Bicycle tyre according to Claim 1,
**characterized in that**
the tyre carcass has two carcass inlays (6, 7), lying on top of one another, wherein the side walls (5) are reinforced and the rolling resistance is reduced by way of the carcass construction.

3. Bicycle tyre according to one of the preceding patent claims,
**characterized in that**
the two carcass inlays (6, 7), lying on top of one another, cover the entire side wall (5), and that carcass inlay ends terminate shortly below the lateral peripheral regions of the running strip (2).

4. Bicycle tyre according to one of the preceding patent claims,
**characterized in that**
the two carcass inlays (6, 7), lying on top of one another, have individual strength members that run in parallel,
wherein the strength members are disposed at an intermediate angle of 40 to 60 degrees,
wherein the strength members of the two carcass inlays (6, 7) have mutually opposite inclination angles.

5. Bicycle tyre according to one of the preceding patent claims,
**characterized in that**
the damping rubber inlay (3) has a material thickness between 0.3 and 1 mm.

6. Bicycle tyre according to one of the preceding patent claims,
**characterized in that**
the damping rubber inlay (3) is composed of a highly elastic rubber having a material rebound value between 70 and 80.

7. Bicycle tyre according to one of the preceding patent claims,
**characterized in that**
a cut-resistant fibrous layer (4) from a cut-resistant woven fabric is disposed below the running strip (2).

## Revendications

1. Pneu de bicyclette (1) avec une bande de roulement (2), une carcasse de pneu, des flancs de pneu (5) et un talon de pneu avec une tringle (8), dans lequel la carcasse de pneu comprend au moins une couche de carcasse, dans lequel l'extrémité de la couche de carcasse (10) est relevée autour de la tringle (8) et se termine dans le flanc (5), dans lequel un insert de gomme d'amortissement (3) en un caoutchouc hautement élastique est disposé entre la bande de roulement (2) et la carcasse de pneu, **caractérisé en ce que** l'insert de gomme d'amortissement (3) présente une épaisseur de matière entre 0,2 et 2 mm, dans lequel les extrémités de la couche de carcasse (10) s'étendent au maximum jusqu'aux régions de bord latérales de la bande de roulement (2), dans lequel le pneu de bicyclette (1) est un pneu de bicyclette de course et fonctionne avec une pression de pneu minimale d'environ 6,5 bar.

2. Pneu de bicyclette selon la revendication 1, **caractérisé en ce que** la carcasse de pneu présente deux inserts de carcasse (6, 7) situés l'un au-dessus de l'autre, dans lequel les flancs (5) sont renforcés et la résistance au roulement est réduite grâce à la construction de la carcasse.

3. Pneu de bicyclette selon l'une quelconque des revendications précédentes, **caractérisé en ce que** les deux inserts de carcasse situés l'un au-dessus de l'autre (6, 7) recouvrent tout le flanc (5) et les extrémités des inserts de carcasse se terminent un peu en dessous des régions de bord latérales de la bande de roulement (2).

4. Pneu de bicyclette selon l'une quelconque des revendications précédentes, **caractérisé en ce que** les deux inserts de carcasse situés l'un au-dessus de l'autre (6, 7) présentent des éléments de résistance individuels orientés parallèlement, dans lequel les éléments de résistance sont disposés sous un angle compris entre 40 et 60 degrés, dans lequel les éléments de résistance des deux inserts de carcasse (6, 7) présentent un angle de pente opposé.

5. Pneu de bicyclette selon l'une quelconque des revendications précédentes, **caractérisé en ce que** l'insert de gomme d'amortissement (3) présente une épaisseur de matière entre 0,3 et 1 mm.

6. Pneu de bicyclette selon l'une quelconque des revendications précédentes, **caractérisé en ce que** l'insert de gomme d'amortissement (3) se compose d'un caoutchouc hautement élastique avec une valeur propre de rebond comprise entre 70 et 80.

7. Pneu de bicyclette selon l'une quelconque des revendications précédentes, **caractérisé en ce qu'**une couche de fibres résistant aux coupures (4) en un tissu résistant aux coupures est disposée en dessous de la bande de roulement (2).
